# EUROPÄISCHE PATENTSCHRIFT

(11) **EP 4 085 807 B1**
(45) Veröffentlichungstag und Bekanntmachung des Hinweises auf die Patenterteilung: **07.06.2023**
(21) Anmeldenummer: 22167732.1
(22) Anmeldetag: 12.04.2022
(51) Int. Cl.: A47L 9/00, A47L 9/28

(54) **VERFAHREN ZUM EIN - UND AUSBRINGEN VON REINIGUNGSROBOTERN IN EINEN WAGEN UND REINIGUNGSSYSTEM**
METHOD FOR INSERTING AND DISCHARGING CLEANING ROBOTS INTO AND OUT OF A CARRIAGE AND CLEANING SYSTEM
PROCÉDÉ DE CHARGEMENT ET DE DÉCHARGEMENT DE ROBOTS DE NETTOYAGE DANS UN CHARIOT ET SYSTÈME DE NETTOYAGE

(30) Priorität: 03.05.2021 BE 202105352
(43) Veröffentlichungstag der Anmeldung: 09.11.2022
(73) Patentinhaber: Miele & Cie. KG, 33332 Gütersloh (DE)
(72) Erfinder: Budke, Mathis, 33615 Bielefeld (DE); Stroop, Nicolas, 33602 Bielefeld (DE)

(56) Entgegenhaltungen:
- DE-A1-102019 110 539
- US-A1- 2020 214 518

## Beschreibung

Die Erfindung betrifft ein Verfahren zum Ein- und Ausbringen von Reinigungsrobotern in einen Wagen und ein Reinigungssystem. Insbesondere betrifft die Erfindung ein Verfahren zum Ein- und Ausbringen von Reinigungsrobotern in einen Wagen, um diese zu verstauen bzw. ihre Reinigungsaufgaben ausführen zu lassen, und ein Reinigungssystem, das ausgebildet ist, das Verfahren durchzuführen.

Insbesondere zur Reinigung größerer gewerblicher Bodenflächen wie bspw. Verkaufsflächen in Modehäusern wird eine Reinigungsstation eingesetzt, die eine Flotte mehrerer autonomer bzw. selbstfahrender Reinigungsroboter und eine oder mehrere Basisstationen aufweist, die zur Entleerung und Energieversorgung ausgebildet ist oder sind. Hierbei ergeben sich folgende Probleme: In der nicht aktiven Reinigungszeit, in der die Reinigungsroboter keine Reinigungsaufgaben durchführen, nimmt eine Flotte bzw. nehmen die einzelnen Reinigungsroboter der Flotte samt ihrer Basisstation(en) viel Platz in Anspruch. Im gewerblichen Anwendungskontext ist dieser hohe Platzanspruch des Reinigungssystems problematisch. So stellt insbesondere auf Verkaufsflächen jeder belegte Quadratmeter einen direkten Eingriff in die Wirtschaftlichkeit des betreffenden Geschäfts dar. Zudem kann das Warenbild durch die umherstehenden Roboter negativ beeinträchtigt werden. Weiterhin besteht die Gefahr, dass außerhalb der aktiven Reinigungszeit Roboter gestohlen oder beschädigt werden.

Um diese Probleme zu umgehen, ist es vorteilhaft, wenn die Reinigungsroboter der Flotte bei Beginn eines jeden Reinigungseinsatzes auf der zu reinigende Fläche ausgebracht und nach Reinigungsabschluss wieder von der zu reinigenden Fläche geschafft und sicher verstaut werden. Das Ausbringen sowie Wegschaffen der Roboter soll dabei möglichst autonom ohne manuelle Tätigkeiten durch Personal erfolgen, sodass keine Personalkosten die Wirtschaftlichkeit negativ beeinflussen. Aus der DE 10 2019 110 539 A1 ist eine Reinigungsstation in Form eines Roboters zum Transport von selbstfahrenden Reinigungsrobotern mit einer Antriebseinrichtung zum autonomen Verfahren über eine Bodenfläche bekannt. Der Roboter weist eine Sensoreinrichtung zum Erfassen seiner Umgebung, eine Lagereinrichtung für die Reinigungsroboter und eine Bewegungseinrichtung zum Bewegen der Reinigungsroboter auf, die so ausgebildet ist, dass sie einen der Reinigungsroboter von der Bodenfläche aufnehmen kann und in die Lagereinrichtung des Roboters einstellen kann.

Der Roboter weist folgende Nachteile auf: Es ist keine konkrete Lösung für die Elemente und die Funktionsweise des Bewegungssystems vorhanden. Es ist kein gezieltes Aus- und Einbringen der Reinigungsroboter in einzelne, bestimmte Lagereinheiten möglich. Zudem weiß der Roboter nicht, welcher Reinigungsroboter in welcher Lagereinheit gelagert wird und kann somit nicht gezielt auf bestimmte Reinigungsroboter zugreifen. So können nicht einzelne, bestimmte Reinigungsroboter entnommen werden. U.a. ist dies notwendig, um einzelne Reinigungsroboter gezielt aufgabenabhängig auf die Fläche zu bringen. Weiterhin ist dies notwendig, um auf bestimmte Reinigungsroboter mit verschiedenen Fähigkeiten und/oder Einsatzbestimmungen zugreifen zu können beispielsweise bei einer Flotte aus mehreren Saugrobotern und einem Wischroboter. Dadurch, dass die Ausgabereihenfolge der Reinigungsroboter nicht definiert ist, ist kein intelligentes, bedarfsgerechtes Ausgabemanagement vorgesehen. Es ist keine Logik zur Ausgabe und zum Einholen der Reinigungsroboter hinterlegt. Die Reinigungsroboter werden vielmehr zufällig aus der Lagerung entnommen. Es kann demnach passieren, dass Reinigungsroboter mit dem geringsten Reinigungsaufwand als erstes aus dem Roboter ausgegeben werden. Der Roboter kann somit nicht maximal effizient eingesetzt werden.

Der Erfindung stellt sich somit das Problem, ein Verfahren zum Ein- und Ausbringen von Reinigungsrobotern in und aus einem Wagen und ein Reinigungssystem bereitzustellen, bei denen die Reinigungsroboter beim Ein- und Ausbringen aus dem Wagen nicht beschädigt werden, und gezielt in einzelne, bestimmte Lagereineinheiten ein- und ausgebracht werden können.

Erfindungsgemäß wird dieses Problem durch ein Verfahren mit den Merkmalen des Patentanspruchs 1 und ein Reinigungssystem mit den Merkmalen des Patentanspruchs 10 gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass das Reinigungssystem weiß, welcher Reinigungsroboter in welchem Staufach gelagert wird und somit gezielt auf bestimmte Reinigungsroboter zugreifen kann. So können einzelne, bestimmte Reinigungsroboter entnommen werden. So wird verhindert, dass Reinigungsroboter mit dem geringsten Reinigungsaufwand als erstes auf die eine zu reinigende Fläche ausgegeben werden. Dadurch erfolgt ein effizienter Einsatz des Reinigungssystems und dadurch letztendlich höhere Reinigungsleistung pro Einsatz. Positions- und Richtungsangaben beziehen sich auf eine betriebsgemäße Aufstell- bzw. Arbeitsposition des Reinigungssystems insbesondere des Wagens.

Die Erfindung betrifft ein Verfahren zum Ein- und Ausbringen von Reinigungsrobotern in einen Wagen, bei dem jeder Reinigungsroboter einzeln in den Wagen automatisch eingebracht wird und die Reinigungsroboter aus dem Wagen in einer Reihenfolge in Abhängigkeit von ihrem ihnen zugewiesenen Reinigungsaufwand oder in einer von einem Nutzer des Wagens festgelegten Reihenfolge automatisch ausgebracht werden.

Dadurch erfolgt das Ein- und Ausbringen intelligent. D.h., die Ein- und Ausbringungsreihenfolgen der Reinigungsroboter aus dem Wagen werden bedarfsgerecht vom Nutzer oder automatisch von einer Steuerung des Wagens festgelegt. In einer alternativen Ausführungsform kann die Ein- und Ausbringungsreihenfolge auch von einem externen Server, beispielsweise von einem Cloud-Server, berechnet werden und an den Wagen und/oder die Reinigungsroboter übermittelt werden.

Es ist sinnvoll beispielsweise zuerst die Reinigungsroboter auf die zu reinigende Fläche zu bringen, die den größten Reinigungsaufwand zu bewältigen haben. In einer bevorzugten Ausführungsform werden zum Ausbringen der Reinigungsroboter aus dem Wagen jeweilige Reinigungs-, Aufgaben- und/oder Kartendaten und eine ID der einzelnen Reinigungsroboter von den Reinigungsrobotern an den Wagen übermittelt und der Wagen berechnet mithilfe dieser Daten die Ausgabe-Reihenfolge der Reinigungsroboter. Für das automatische Ausbringen der Reinigungsroboter werden bevorzugt die jeweiligen Reinigungs-/Aufgaben- und/oder Kartendaten und die ID der einzelnen Reinigungsroboter u.a. zu reinigende Fläche, Zeitfenster der Reinigung, benötigte Zeit, etc. an die Steuerung des Wagens übermittelt. Die Steuerung bestimmt bevorzugt mithilfe dieser Daten eine sinnvolle Ausgabe-Reihenfolge der Reinigungsroboter. Hierzu werden bevorzugt innerhalb der Steuerung des Wagens die Aufgaben-/Kartendaten der einzelnen Reinigungsroboter zusammengeführt und gegenübergestellt. Durch einen Algorithmus werden die Daten bevorzugt in eine logische Reihenfolge gebracht, die das von dem Nutzer hinterlegte Reinigungsszenario möglichst effizient bedient. In einer alternativen Ausführungsform erfolgt das Flottenmanagement eines Wagens und der darauf angeordneten Reinigungsroboter über einen Server, insbesondere einen Cloud-Server. Auf dem Server erfolgt die Organisation und Berechnung aller Reinigungs-, Aufgaben und/oder Kartendaten inklusive der daraus resultierenden Ausgabe-Reihenfolge für alle beteiligten Reinigungsroboter. Diese und der Wagen werden vom Server als Systemkomponenten verwaltet, organisiert und gesteuert.

Die Daten sowie die ID der Reinigungsroboter sind bevorzugt durch die Steuerung des Wagens abrufbar und/oder ermittelbar. Als Kommunikationsschnittstelle zwischen der Steuerung des Wagens und den Reinigungsrobotern sind technische Ausprägungsvarianten in Form von Bluetooth, WiFi, Infrarot oder serieller Kommunikation über die Ladekontakte denkbar. Innerhalb der Steuerung werden bevorzugt die über die Kommunikationsschnittstelle übermittelten individuellen Reinigungsroboterdaten mit Kennungen entsprechender Endlagensensoren des Wagens verknüpft. So ist gewährleistet, dass innerhalb des Reinigungssystems zu jeder Zeit hinterlegt ist, welcher Reinigungsroboter sich wo im Wagen befindet. Eine gezielte Entnahme eines bestimmten Reinigungsroboters ist somit möglich.

Bevorzugt wird jeder Reinigungsroboter in den Wagen eingebracht, sobald er dem Wagen ein Signal zum Einbringen sendet. Dadurch ist eine gezielte Einbringung der Reinigungsroboter nach vollbrachtem Reinigungseinsatz vorgesehen. Die Festlegung der Einbringungsreihenfolge nach Einsatzende erfolgt vorzugsweise automatisch und bedarfsgerecht. D.h. nach Beendigung des Einsatzes meldet bevorzugt jeder Reinigungsroboter einzeln eine Anfrage an die Steuerung, eingelagert zu werden und wird daraufhin direkt eingelagert. Falls mehrere Reinigungsroboter ihren Einsatz gleichzeitig beenden, werden bevorzugt die Aufnahmeanfragen innerhalb der Steuerung in eine Reihenfolge gebracht. Die Reihenfolge orientiert sich bevorzugt an der aktuellen Entfernung der einzelnen Reinigungsroboter von dem Wagen. Der Reinigungsroboter mit der geringsten Entfernung wird bevorzugt als erstes eingebracht. In einer weiteren Ausführungsform wird jeder Reinigungsroboter in den Wagen in einer von einem Nutzer festgelegten Reihenfolge in den Wagen eingebracht. Dadurch kann der Nutzer die Einbringungsreihenfolge individuell festlegen.

In einer bevorzugten Ausführungsform weist der Wagen eine Vielzahl von Staufächern auf, und wird für jeden der Reinigungsroboter ein jeweiliges Staufach der Vielzahl von Staufächern bestimmt, in das er automatisch eingebracht wird. Dabei können die Reinigungsroboter einzelnen Staufächern fest oder auch variabel zugeordnet sein. Eine variable Zuordnung macht ggf. Sinn, falls sich die Ausgabereihenfolge für den nächsten Einsatz ändert. Vorzugsweise wird der Reinigungsroboter, welcher beim nächsten Einsatz zuerst ausgegeben werden soll, in das unterste Staufach eingebracht. Die Staufächer sind bevorzugt vertikal übereinander gestapelt.

Bevorzugt werden bei und/oder nach dem Einbringen eines der Reinigungsroboter in das bestimmte Staufach seine Reinigungs-, Aufgaben- und/oder Kartendaten und seine ID mit dem bestimmten Stauchfach verknüpft.

In einer bevorzugten Ausführungsform weist das Einbringen eines der Reinigungsroboter folgende Schritte auf Fahren eines einzubringenden Reinigungsroboters auf ein Aufnahmeelement eines Liftsystems des Wagens, vertikales Verfahren des Aufnahmeelements bis zu dem bestimmten Staufach und Fahren des Reinigungsroboters in das Staufach. Das Ausbringen eines der Reinigungsroboter weist bevorzugt folgende Schritte auf vertikales Verfahren des Aufnahmeelements des Liftsystems bis zu dem bestimmten Staufach, Fahren des in dem Staufach verstauten Reinigungsroboters auf das Aufnahmeelement, vertikales Verfahren des Aufnahmeelements, bis es einen Untergrund erreicht, auf dem der Wagen steht, und Fahren des Reinigungsroboters von dem Aufnahmeelement auf den Untergrund. Die Staufächer sind bevorzugt vertikal übereinander gestapelt.

Das Liftsystem weist bevorzugt das Aufnahmeelement zum Aufnehmen eines der Reinigungsroboter auf. Es ist bevorzugt als zwei vertikal verfahrbare Laderampen ausgebildet, die über einen Steg miteinander verbunden sind, sodass sie synchron bewegt werden können. Bevorzugt geschieht das vertikale Verfahren des Aufnahmeelementes nach einem "Gabelstapler"-Prinzip mithilfe von zwei synchron laufenden Seilwinden. Denkbar sind hier auch andere mechanische Ausprägungsformen wie beispielsweise ein Ritzel, welches vertikal auf einer feststehenden Zahnstange bewegt wird oder eine Gewindespindel, welche einen rotationsfesten Schlitten vertikal verfährt. Die Seilwinden sind bevorzugt durch eine Welle miteinander gekoppelt. An der der Welle ist bevorzugt ein Elektromotor angebracht, der auf Befehl der Steuerung des Wagens bewegt wird. Ferner weist das Liftsystem bevorzugt zwei Seile auf, die über Umlenkrollen in die gewünschte vertikale Verfahrrichtung gebracht werden. Die Seile sind bevorzugt mit jeweils einem von zwei Schlitten verbunden, welche wiederum eine feste Verbindung zum Steg haben. Die Schlitten werden bevorzugt mithilfe einer Führungsstange und eines Führungskanals vertikal geführt. Eine Verkantung der Schlitten wird bevorzugt durch je zwei Laufrollen verhindert, die an den Schlitten angebracht sind und sich an den Flächen des Führungskanals abstützen bzw. abrollen.

Das gezielte Anfahren der Staufächer erfolgt bevorzugt über Endlagensensoren. Hierzu sind bevorzugt an den Staufächern selbst und an dem Steg entsprechende Sensoren und/oder Aktoren verbaut. Gibt die Steuerung den Befehl zum Ausgeben eines der Reinigungsroboter aus seinem Staufach, bewegen sich bevorzugt die Schlitten samt Steg und Laderampen bis zu einer definierten Endlage direkt vor das entsprechende Staufach. Ist die Endlage erreicht sendet die Steuerung bevorzugt über die Kommunikationsschnittelle ein Startsignal an den entsprechenden Reinigungsroboter, dass er sein Staufach verlassen und das Aufnahmeelement befahren kann.

Alternativ kann das Anfahren der Staufächer durch einen Schrittmotor erfolgen, welcher die getätigten Umdrehungen detektiert und der Steuerung übermittelt. Nach einer definierten Anzahl Umdrehungen schaltet die Steuerung den Elektromotor aus. Ebenso kann ein Umdrehungssensor an einem rotierenden Bauteil die Anzahl der getätigten Umdrehungen erfassen und der Steuerung übermitteln.

In einer bevorzugten Ausführungsform wird, während der auszubringende Reinigungsroboter sich aus dem Staufach bewegt, seine Endposition detektiert. Wenn das Aufnahmeelement vor einem der Staufach angeordnet ist, fährt der betreffende Reinigungsroboter bevorzugt nach Empfang des Startsignals aus seinem Staufach über den Steg auf die Laderampen. Die Detektion der Endposition des Reinigungsroboters kann dabei über im Reinigungsroboter verbaute Absturzsensoren realisiert werden. Alternativ kann dem Reinigungsroboter die exakte Entfernung der Strecke für die Fahrt aus dem Staufach vorgeben werden. Der Reinigungsroboter kann mithilfe eines LIDAR-Sensors oder odometrisch über sensorische Ermittlung des zurückgelegten Weges den Abstand zu einem in dem Staufach angeordneten Ladekontakt ermitteln und somit die Strecke der Fahrt kontrollieren. Dadurch wird verhindert, dass der Reinigungsroboter während des Ausbringens von dem Wagen stürzt. Bevorzugt fahren die Reinigungsroboter jeweils rückwärts aus ihren Staufächern.

Bevorzugt befindet der ein- oder auszubringende Reinigungsroboter sich in einem Pausenmodus, während er auf dem Aufnahmeelement angeordnet von dem Liftsystem verfahren wird. Der Reinigungsroboter stoppt bevorzugt seine Fahrt aus dem Staufach selbständig und begibt sich in den Pausenmodus, sobald das Ende des Aufnahmeelements wie der Laderampen erreicht ist. Bevorzugt erfasst der Reinigungsroboter selbst seine Position und sendet ein Signal an die Steuerung, dass er vollständig aus dem Staufach gefahren und der Pausenmodus aktiviert ist. Nach Erhalt des Signals, dass der Reinigungsroboter vollständig aus dem Staufach gefahren und der Pausenmodus aktiviert ist, gibt die Steuerung bevorzugt einen Befehl, woraufhin bevorzugt der Elektromotor die Welle bewegt, so dass das Aufnahmeelement samt Reinigungsroboter nach unten Richtung des Untergrunds bewegt wird, auf dem der Wagen steht.

Eine alternative Ausführungsform sieht vor, dass der Wagen die Fahrt bevorzugt die Rückwärtsbewegung des Reinigungsroboters aus dem Staufach erfasst. So kann durch einen an dem Eingang zum Staufach verbauten Positionssensor bestimmt werden, wann der Reinigungsroboter komplett aus dem Staufach gefahren ist und sich am Ende des Aufnahmeelementes befindet. Hier können wiederum verschiedene Arten von Endlagensensoren wie lichtbasiert, magnetisch, mechanisch, etc. zum Einsatz kommen. Die Steuerung gibt bevorzugt bei Erreichen der Endlage ein Signal an den Reinigungsroboter zu pausieren und anschließend ein weiteres Signal an den Elektromotor das Aufnahmeelement nach unten Richtung Untergrund zu bewegen. Diese Variante kann redundant zur erstgeschilderten eingesetzt werden. Somit ist der Fehlerfall abgesichert, dass der Reinigungsroboter das Ende des Aufnahmeelementes überfährt und aus dem Wagen stürzt. Weiterhin wird dadurch ein zweiter Fehlerfall verhindert, dass das Liftsystem die Vertikalbewegung startet, ohne dass der Reinigungsroboter bereits seine Endposition erreicht hat. Das Aufnahmeelement ist bevorzugt mit einer gummierten, rutschhemmenden Oberfläche versehen. Dadurch ist gewährleistet, dass der Reinigungsroboter während der Vertikalfahrt nicht von dem Aufnahmeelement stürzt, falls der Wagen nicht ganz waagerecht ausgerichtet sein sollte oder falls der Wagen einen Stoß o.ä. erfahren sollte.

Erreicht das Aufnahmeelement samt Reinigungsroboter am Ende der Vertikalbewegung den Untergrund, wird dies bevorzugt durch einen weiteren Endlagensensor des Wagens erfasst und die Steuerung stoppt den Elektromotor.

In einer bevorzugten Ausführungsform empfängt der auszubringende Reinigungsroboter bei und/oder nach Beenden seines Ausbringens aus dem Wagen ein Signal, seine Reinigung zu starten. Dann verlässt der Reinigungsroboter das Aufnahmeelement und führt seine Reinigungsaufgabe aus.

Bevorzugt vermerkt der auszubringende Reinigungsroboter bei Verlassen des Liftsystems seine Position als Start- und Endpunkt seiner durchzuführenden Reinigung in in ihm hinterlegten Kartendaten oder in einer neu zu erstellenden Karte. Bevorzugt weist der Wagen elektronische Komponenten wie eine Infrarot-Schnittstelle auf, die bei Anordnung des Aufnahmeelements samt Reinigungsroboter auf dem Untergrund unmittelbar vor dem Reinigungsroboter liegt. Der Reinigungsroboter erfasst bevorzugt die direkt vor ihm liegende Infrarotquelle und vermerkt diese in seiner digitalen Karte als Start- und Endpunkt seiner Reinigungsaktivität. Anschließend fährt der Reinigungsroboter bevorzugt von dem Aufnahmeelement und beginnt die Reinigung der zu reinigenden Fläche.

Bevorzugt detektiert der Wagen nach dem Ausbringen eines der Reinigungsroboter, ob dieser Reinigungsroboter den Wagen verlassen hat. Über die Infrarot-Schnittstelle kann die Steuerung des Wagens bevorzugt ermitteln, ob der Reinigungsroboter das Aufnahmeelement verlassen hat. Vorzugsweise sollte die korrekte Positionierung und Anwesenheit des Reinigungsroboters auf dem Aufnahmeelement ergänzend durch einen weiteren Sensor z.B. eine Lichtschranke erfasst werden. Diese kann ggf. auch das Verlassen des Reinigungsroboters quittieren. Das Aufnahmeelement wird in den Ausgangszustand zurückversetzt und beginnt bei Bedarf weitere im Wagen verstaute Reinigungsroboter auf die zu reinigende Bodenfläche auszubringen. Sind alle für die Reinigung der Bodenfläche bzw. Untergrund vorgesehenen Reinigungsroboter ausgebracht, verharrt bevorzugt das Aufnahmeelement in seiner unteren Endposition auf dem Untergrund.

Beendet einer der Reinigungsroboter seine Reinigungsaufgabe begibt er sich bevorzugt autark zurück zum Wagen. Stand dem Reinigungsroboter zum Reinigungsbeginn eine bereits vorhandene Karte zur Verfügung, wurde bevorzugt die aktuelle Position des Wagens als Startpunkt in dieser Karte definiert. War zu Beginn der Reinigung keine Karte in dem Reinigungsroboter vorhanden, wird bevorzugt die Position des Wagens als Nullpunkt einer neu aufgebauten Karte festgelegt werden.

Ferner kann ein IR Leitstrahl für das exakte Auffinden und Anfahren des Wagens verwendet werden, den der Wagen aussendet. Alternativ kann hierzu ein LiDar Reflektor vom Wagen verwendet werden. Schon vor Erreichen des Wagens sendet der Reinigungsroboter bevorzugt die Aufnahmeanfrage an die Steuerung. Ist das Liftsystem frei, kann der anfragende Reinigungsroboter direkt auf das Aufnahmeelement fahren. Ist das Liftsystem von einem anderen Reinigungsroboter belegt, verharrt der anfragende Reinigungsroboter bevorzugt in einer Warteposition in unmittelbarer Nähe des Wagens, bis ihn ein Frei-Signal der Steuerung erreicht. Hat der Reinigungsroboter die passende Position auf dem Aufnahmeelement, begibt er sich bevorzugt wiederum den Pausenmodus. Das Liftsystem bringt den Reinigungsroboter dann bevorzugt vor das ihm zugewiesene Staufach. Das Liftsystem arbeitet dabei bevorzugt analog zum Vorgehen bei der Ausbringung des Reinigungsroboters. Ist das dem auf dem Aufnahmeelement angeordneten Reinigungsroboter zugewiesene Staufach erreicht, sendet die Steuerung bevorzugt ein Signal zur Einfahrt an den Reinigungsroboter. Dieser beendet bevorzugt dann den Pausenmodus und fährt geradeaus in das Staufach ein. Sobald der Reinigungsroboter in dem Staufach angeordnet ist, meldet die Steuerung bevorzugt die Freigabe zur Weiterfahrt des Aufnahmeelementes an das Liftsystem. Dieses kann nun das Aufnahmeelement wieder in Richtung Untergrund fahren und bei Bedarf weitere Reinigungsroboter aufnehmen.

Ferner betrifft die Erfindung ein Reinigungssystem mit einem Wagen und mit einer Vielzahl an Reinigungsrobotern, das ausgebildet ist, ein Verfahren nach einer oder mehreren der vorangehend beschriebenen Ausführungsformen auszuführen.

Bei den Reinigungsrobotern, welche in dem Wagen verstau- bzw. lagerbar sind, handelt es sich bevorzugt um Saug- und/oder Wischroboter, bevorzugter um Saugroboter, die autonom und selbstfahrend sind. In den Wagen sind bevorzugt mindestens zwei, bevorzugt mindestens 3 bis 15, bevorzugter 4 bis 10 Reinigungsroboter verstaubar.

Der Wagen ist bevorzugt zur Verstauung und bevorzugt Absaugung und Energieversorgung der Reinigungsroboter ausgebildet. Der Wagen weist bevorzugt das Liftsystem, ein Absaugsystem, das ausgebildet ist, die Reinigungsroboter zu entleeren, und eine Energieversorgungseinheit auf, die ausgebildet ist, mit einem Stromnetz verbunden zu werden. Bevorzugt weist der Wagen die Staufächer zum Verstauen der Reinigungsroboter auf. Weiterhin weist er bevorzugt Transportrollen auf, die ausgebildet sind, den Wagen über einen Untergrund zu bewegen, wenn er vom Nutzer geschoben oder gezogen wird.

Bevorzugt weist der Wagen mindestens ein Türelement auf, das derart anordbar ist, dass es das klappbare Aufnahmeelement verschließt oder freilegt. Das Türelement bildet zusammen mit Wagen-Außenwänden ein Gehäuse, das, wenn das Türelement geschlossen ist, das Wageninnere vollständig ummantelt. Die im Wagen verstauten Reinigungsroboter und das Wageninnere sind komplett ummantelt. Durch das Türelement sind die einzelnen Reinigungsroboter während der Lagerung im Wagen vor Diebstahl oder Beschädigung durch äußere Einflüsse geschützt.

Der Wagen weist bevorzugt die Energieversorgungseinheit auf, die ausgebildet ist, den Wagen und in ihm verstaute Reinigungsroboter mit elektrischer Energie zu versorgen. D. h., die Energieversorgungseinheit ist dazu ausgelegt, sämtliche Komponenten des Wagens als auch die Energiespeichereinheiten der Reinigungsroboter mit elektrischer Energie versorgen. Zum Aufladen der Energieversorgungseinheit kann der Wagen über einen Netzanschluss verfügen. Der Netzanschluss kann bei Bedarf leicht vom Stromnetz getrennt werden, wenn der Wagen zu einem Einsatzort bewegt werden soll. Alternativ oder zusätzlich ist die Energieversorgungseinheit in Form eines Akkumulators entnehmbar in und/oder an dem Wagen angeordnet. Die Energieversorgungseinheit ermöglicht einen Reinigungsbetrieb, welcher weitestgehend autark von bestehenden Anschlüssen des Gebäude-Stromversorgungsnetzes ist. Darüber hinaus erhöht der Wegfall eines sonst erforderlichen Netzanschlusskabels den Mobilitätsgrad des Wagens. Zudem kann die Verwendung eines Akkumulators als Energieversorgungseinheit vorteilhaft sein, weil Gewerbeflächen üblicherweise eine überschaubare Anzahl an Steckdosen aufweisen, und kann die Positionierung des Wagens auf der zu reinigenden Fläche frei erfolgen und ist nicht örtlich an Steckdosen gebunden. Somit kann die hinsichtlich eines effizienten Einsatzes der Reinigungsroboterflotte sinnvollste Positionierung auf der zu reinigenden Fläche gewählt werden.

Bevorzugt weist jedes Staufach einen Ladekontakt auf, der ausgebildet ist, mit einem in dem entsprechenden Staufach angeordneten Reinigungsroboter kontaktiert zu werden, um den Reinigungsroboter mittels der Energieversorgungseinheit mit Energie zu versorgen. Die Reinigungsroboter können ein Erfassen des Ladekontakts zu einer korrekten Positionierung in das Staufach verwenden, in das sie einfahren.

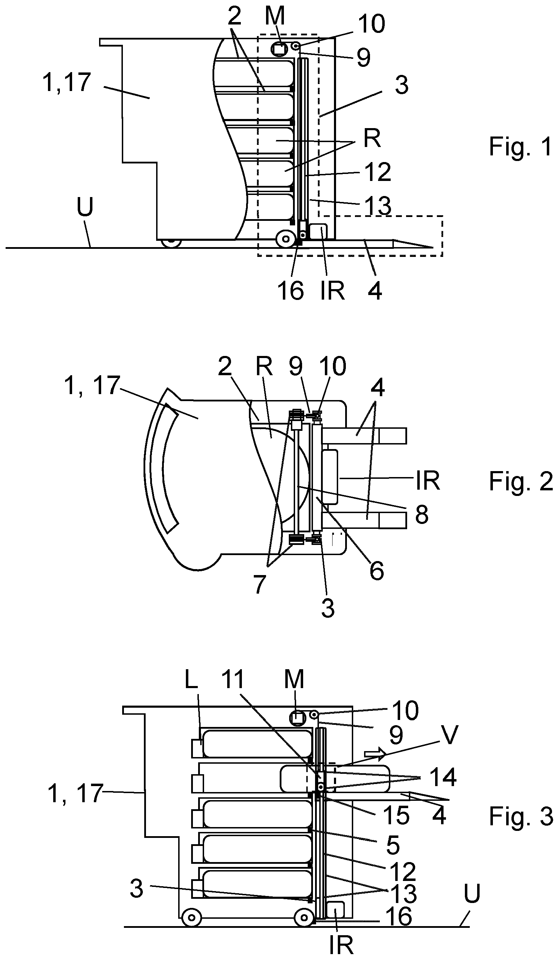

Ein Ausführungsbeispiel der Erfindung ist in den Zeichnungen rein schematisch dargestellt und wird nachfolgend näher beschrieben. Es zeigt schematisch und nicht maßstabsgerecht
- Fig. 1 bis 9: einen Teil-Ablauf eines erfindungsgemäßen Verfahrens in Teil-Seiten-/Teil-Querschnittsansicht, Teil-Drauf-/Teil-Querschnittsansicht bzw. Querschnittsansicht eines erfindungsgemäßen Reinigungssystems.

Fig. 1 bis 9 zeigen einen Teil-Ablauf eines erfindungsgemäßen Verfahrens in Teil-Seiten-/Teil-Querschnittsansicht, Teil-Drauf-/Teil-Querschnittsansicht bzw. Querschnittsansicht eines erfindungsgemäßen Reinigungssystems. Das erfindungsgemäße Verfahren ist ein Verfahren zum Ein- und Ausbringen von Reinigungsrobotern R in einen Wagen 1, bei dem jeder Reinigungsroboter R einzeln in den Wagen 1 automatisch eingebracht wird und die Reinigungsroboter R aus dem Wagen 1 in einer Reihenfolge in Abhängigkeit von ihrem ihnen zugewiesenen Reinigungsaufwand oder in einer von einem Nutzer (nicht gezeigt) des Wagens 1 festgelegten Reihenfolge automatisch ausgebracht werden. In den Fig. 1 bis 9 ist das automatische Ausbringen eines der Reinigungsroboter R gezeigt. Die anderen Reinigungsroboter R werden analog ausgebracht, was hier nicht gezeigt ist. Das automatische Einbringen der Reinigungsroboter nach Beenden ihrer Reinigungsaufgaben erfolgt ebenfalls analog zum Ausbringen, was hier nicht gezeigt ist.

Fig. 1 zeigt eine Teil-Seiten-/Teil-Querschnittsansicht des erfindungsgemäßen Reinigungssystems in einer betriebsbereiten Arbeitsposition. Das Reinigungssystem weist einen Wagen 1 und eine Vielzahl von Reinigungsrobotern R auf. Der Wagen 1 ist ausgebildet, um die Reinigungsroboter R außerhalb einer Reinigungsphase, in der sie ihre Reinigungsaufgaben ausführen zu lagern. In der betriebsbereiten Arbeitsposition ist der Wagen 1 bereit zum Ein- und Ausbringen der Reinigungsroboter R, wobei jeder Reinigungsroboter R einzeln in den Wagen 1 automatisch eingebracht wird und die Reinigungsroboter R aus dem Wagen 1 in einer Reihenfolge in Abhängigkeit von ihrem ihnen zugewiesenen Reinigungsaufwand oder in einer von einem Nutzer (nicht gezeigt) des Wagens 1 festgelegten Reihenfolge automatisch ausgebracht werden. Der Wagen 1 weist eine Vielzahl von Staufächern 2 auf, die vertikal übereinander gestapelt sind und jeweils ausgebildet sind, einen der Reinigungsroboter R aufzunehmen. Die Staufächer 2 sind in einem Gehäuse 17 untergebracht.

Der Wagen 1 weist ferner ein Liftsystem 3 auf, das vertikal verfahrbar ist, so dass die Reinigungsroboter R einzeln zu oder weg von einem der Staufächer 2 transportiert werden können und zwischen einem Untergrund U, auf dem der Wagen 1 in betriebsgemäßer Arbeitsposition steht, verfahrbar sind. Das Liftsystem 3 weist ein Aufnahmeelement 4 auf, auf dem ein einzelner Reinigungsroboter R anordbar ist und das von dem Liftsystem 3 vertikal verfahrbar ist. Um Verfahren zu werden, fahren die Reinigungsroboter R auf das Aufnahmeelement 4, um sich auf ihm anzuordnen. Zur korrekten Positionierung eines der Reinigungsroboter R auf dem Aufnahmeelement 4 weist der Wagen 1 eine IR-Schnittstelle IR und einen Endlagensensor 16 auf, die den betroffenen Reinigungsroboter R bei seiner Positionierung auf dem Aufnahmeelement 4 unterstützen. Um das Aufnahmeelement 4 vertikal zu verfahren, sind ein Elektromotor M, eine Umlenkrolle 10, ein Seil 9, ein Führungskanal 13 und eine Führungsstange 12 vorgesehen. In Fig. 1 ist der Wagen betriebsbereit gezeigt, um die in ihm gelagerten Reinigungsroboter R auf einen Untergrund U auszubringen, auf dem der Wagen 1 steht. Der Wagen 1 weist eine Steuerung (nicht gezeigt) auf, die jeweils einen zugewiesenen Reinigungsaufwand jedes der Reinigungsroboter R ermittelt und ein Ausbringen der Reinigungsroboter R entsprechend ihrem Reinigungsaufwand in einer festgelegten Reihenfolge automatisch steuert.

Fig. 2 zeigt eine Teil-Drauf-/Teil-Querschnittansicht des in Fig. 1 gezeigten Reinigungssystems in der gleichen betriebsbereiten Arbeitsposition wie in Fig. 1. Der Wagen 1 weist ferner zwei Seilwinden 7 auf, und er weist einen Steg 6 auf, der zwei vertikal verfahrenen Laderampen verbindet, die das Aufnahmeelement 4 bilden und mittels des Stegs 6 synchron bewegt werden können.

Das vertikale Verfahren der Laderampen funktioniert nach einem "Gabelstapler"-Prinzip mithilfe der zwei synchron laufenden Seilwinden 7. Die Seilwinden 7 sind durch die Welle 8 miteinander gekoppelt, an die der Elektromotor M angebracht ist, der auf Befehl der Steuerung (nicht gezeigt) des Wagens 1 bewegt wird.

Fig. 3 zeigt eine Teil-Seiten-/Teil-Querschnittsansicht des in Fig. 1 gezeigten Reinigungssystems in einer weiteren Arbeitsposition. Das Aufnahmeelement 4 ist von dem Untergrund vertikal zu einem der Staufächer 2 verfahren, so dass der in diesem Staufach 2 untergebrachte Reinigungsroboter R selbständig auf das Aufnahmeelement 4 fährt, wie durch einen Pfeil angedeutet. Jedes Staufach 2 weist einen Ladekontakt L auf, der ausgebildet ist, den sich im Staufach 2 befindenden Reinigungsroboter R mithilfe einer Energieversorgungseinrichtung (nicht gezeigt) des Wagens 1 mit Energie zu versorgen.

Die Steuerung (nicht gezeigt) hat ermittelt, dass der zweitoberste Reinigungsroboter R den höchsten Reinigungsaufwand aufweist und als Erster ausgebracht werden soll. Dementsprechend wird das Aufnahmeelement 4 zu dem zweitobersten Staufach 2 verfahren, um diesen Reinigungsroboter R auszubringen. Zum Verfahren des Aufnahmeelementes 4 werden die zwei Seile 9 über die Umlenkrollen 10 in die gewünschte vertikale Verfahrrichtung gebracht. Sie sind mit jeweils einem von zwei Schlitten 11 verbunden, welche wiederum eine feste Verbindung zum Steg 6 haben. Die Schlitten 11 werden mithilfe der Führungsstange 12 und des Führungskanals 13 vertikal geführt. Eine Verkantung der Schlitten 11 wird durch je zwei Laufrollen 14 verhindert, die an den Schlitten 11 angebracht sind und sich an den Flächen des Führungskanals 13 abstützen bzw. abrollen.

Das gezielte Anfahren der Staufächer 2 erfolgt über Endlagensensoren 5,15. Hierzu sind an den Staufächern 2 selbst und an dem Steg 6 entsprechende Sensoren und/oder Aktoren 5,15 verbaut. Gibt die Steuerung (nicht gezeigt) den Befehl zur Entnahme eines Reinigungsroboters R aus seinem Staufach 2, bewegen sich die Schlitten 11 samt Steg 6 und Aufnahmeelement 4 bis zu der definierten Endlage direkt vor das entsprechende Staufach 2. Ist die Endlage erreicht, sendet die Steuerung über eine Kommunikationsschnittelle ein Startsignal an den entsprechenden Reinigungsroboter R. Der betreffende Reinigungsroboter R fährt nun rückwärts aus seinem Staufach 2 über den Steg 6 auf das Aufnahmeelement 4.

Fig. 4 zeigt eine Draufsicht des in Fig. 3 gezeigten Reinigungssystems in der gleichen weiteren Arbeitsposition wie in Fig. 3, wobei die obere Außenwand weggelassen ist. Der Wagen 1 weist die Steuerung S auf. Der Reinigungsroboter R fährt auf die zwei Laderampen.

Fig. 5 zeigt eine vergrößerte mit V gekennzeichnete Teil-Querschnittsansicht des in Fig. 3 gezeigten Reinigungssystems. Gezeigt ist ein Teil des Liftsystems 3 mit dem Schlitten 11, der Führungsstange 12 und den Laufrollen 14.

Fig. 6 zeigt eine Querschnittsansicht des in Fig. 1 gezeigten Reinigungssystems in einer noch weiteren Arbeitsposition. Der in Fig. 3 aus seinem Staufach 2 fahrende Reinigungsroboter R hat sein Staufach 2 verlassen und sich vollständig auf dem Aufnahmeelement 4 angeordnet, das nun vertikal mittels des Liftsystems 3 vertikal in Richtung Untergrund U verfahren wird, wie durch einen Pfeil angedeutet.

Der Reinigungsroboter R stoppt die Rückwärtsfahrt beim Ausfahren aus seinem Staufach 2 und begibt sich in einen Pausenmodus, sobald das Ende des Aufnahmeelementes 4 erreicht ist. Die Detektion einer Endposition des Reinigungsroboters R kann dabei über in ihm verbaute Absturzsensoren (nicht gezeigt) realisiert werden. Der Reinigungsroboter R erfasst selbst seine Position und sendet ein Signal an die Steuerung (nicht gezeigt) des Wagens 1, dass er vollständig aus seinem Staufach 2 gefahren und der Pausenmodus aktiviert ist.

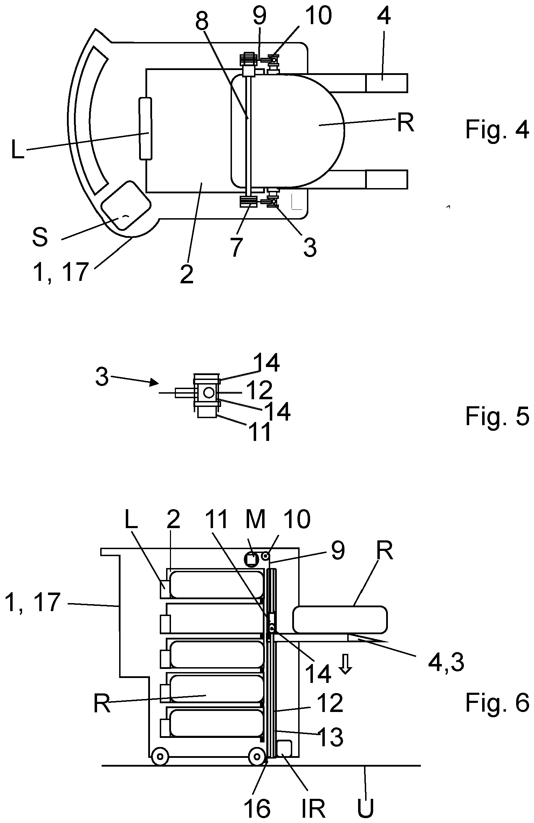

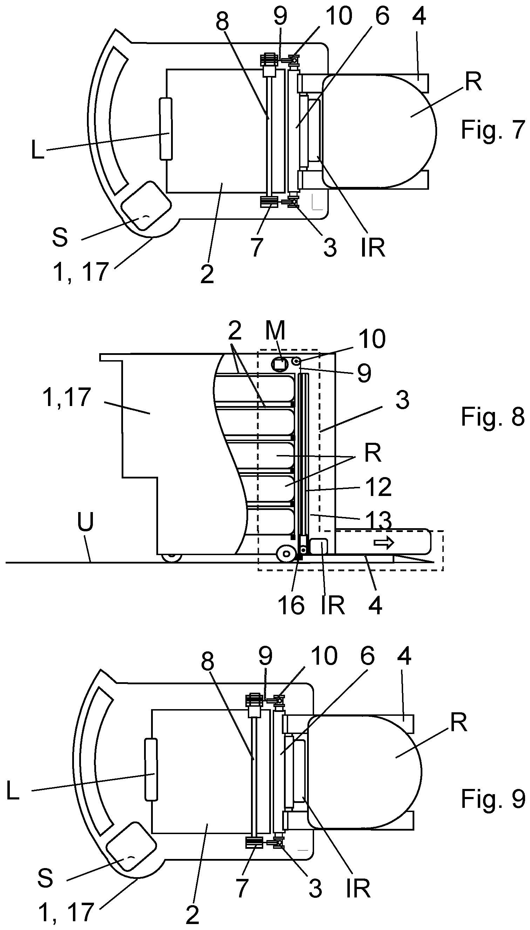

Fig. 7 zeigt eine weitere Draufsicht des in Fig. 6 gezeigten Reinigungssystems in der gleichen noch weiteren Arbeitsposition wie in Fig. 6, wobei die obere Außenwand wegelassen ist. Der Reinigungsroboter R ist vollständig auf dem Aufnahmeelement 4 angeordnet, während er vertikal zu dem Untergrund (nicht gezeigt) verfahren wird. Auf Befehl der Steuerung S bewegt daraufhin der Elektromotor (nicht gezeigt) die Welle 8, sodass das Aufnahmeelement 4 samt Reinigungsroboter R nach unten Richtung Untergrund (nicht gezeigt) bewegt wird.

Fig. 8 zeigt eine weitere Querschnittsansicht des in Fig. 1 gezeigten Reinigungssystems in einer noch weiteren Arbeitsposition. Die in Fig. 8 gezeigte Querschnittsansicht entspricht der in Fig. 6 gezeigten Querschnittsansicht mit dem Unterschied, dass das Aufnahmeelement 4 auf dem Untergrund U aufliegt, und der Reinigungsroboter R beginnt, von dem Aufnahmeelement 4 auf den Untergrund U zu fahren, wie durch einen Pfeil angedeutet.

Erreichen das Aufnahmeelement 4 samt Reinigungsroboter R den Untergrund U, wird dies wieder durch den Endlagensensor 16 erfasst und die Steuerung (nicht gezeigt) stoppt den Elektromotor M.

Fig. 9 zeigt eine weitere Draufsicht des in Fig. 8 gezeigten Reinigungssystems in der gleichen noch weiteren Arbeitsposition wie in Fig. 8, wobei die obere Außenwand weggelassen ist. Die Querschnittsansicht des in Fig. 9 gezeigten Reinigungssystem entspricht dem in Fig. 7 gezeigten Reinigungssystem mit dem Unterschied, dass das Aufnahmeelement 4 auf dem Untergrund U (nicht gezeigt) angeordnet ist und der Reinigungsroboter R beginnt, von dem Aufnahmeelement 4 auf den Untergrund zu fahren.

Erreichen das Aufnahmeelement 4 samt Reinigungsroboter R den Untergrund (nicht gezeigt), liegt unmittelbar vor dem Reinigungsroboter R die Infrarotschnittstelle IR. Die Steuerung S gibt ein Signal an den Reinigungsroboter R die Reinigungsfahrt zu starten. Der Reinigungsroboter R erfasst nun die direkt vor ihm liegende Infrarot-Schnittstelle IR und vermerkt diese in seiner digitalen Karte als Start- und Endpunkt seiner Reinigungsaktivität. Anschließend fährt der Reinigungsroboter R von dem Aufnahmeelement 4 und beginnt die Reinigung des Untergrunds. Über die Infrarot-Schnittstelle IR kann die Steuerung S ermitteln, ob der Reinigungsroboter R die Aufnahmeelement 4 verlassen hat.

### Bezugszeichenliste

- A: Absaugsystem
- L: Ladekontakt
- M: Elektromotor
- R: Reinigungsroboter
- S: Steuerung
- 1: Wagen
- 2: Staufach
- 3: Liftsystem
- 4: Aufnahmeelement
- 5: Sensor/Aktuator
- 6: Steg
- 7: Seilwinde
- 8: Welle
- 9: Seil
- 10: Umlenkrolle
- 11: Schlitten
- 12: Führungsstange
- 13: Führungskanal
- 14: Laufrolle
- 15: Sensor/Aktuator
- 16: Endlagensensor
- 17: Gehäuse

## Patentansprüche

1. Verfahren zum Ein- und Ausbringen von Reinigungsrobotern (R) in einen Wagen (1), bei dem jeder Reinigungsroboter (R) einzeln in den Wagen (1) automatisch eingebracht wird und die Reinigungsroboter (R) aus dem Wagen (1) in einer Reihenfolge in Abhängigkeit von ihrem ihnen zugewiesenen Reinigungsaufwand oder in einer von einem Nutzer des Wagens (1) festgelegten Reihenfolge automatisch ausgebracht werden.

2. Verfahren nach Anspruch 1, **dadurch gekennzeichnet, dass** zum Ausbringen der Reinigungsroboter (R) aus dem Wagen (1) in einer Reihenfolge in Abhängigkeit von ihrem ihnen zugewiesenen Reinigungsaufwand jeweilige Reinigungs-, Aufgaben- und/oder Kartendaten und eine ID der einzelnen Reinigungsroboter (R) von den Reinigungsrobotern (R) an den Wagen (1) übermittelt werden und der Wagen (1) mithilfe dieser Daten die Ausgabe-Reihenfolge der Reinigungsroboter (R) berechnet.

3. Verfahren nach Anspruch 1 oder 2, **dadurch gekennzeichnet, dass** jeder Reinigungsroboter (R) in den Wagen (1) eingebracht wird, sobald er dem Wagen (1) ein Signal zum Einbringen sendet, oder dass jeder Reinigungsroboter (R) in den Wagen (1) in einer von einem Nutzer festgelegten Reihenfolge in den Wagen (1) eingebracht wird.

4. Verfahren nach einem der vorangehenden Ansprüche, **dadurch gekennzeichnet, dass** der Wagen (1) eine Vielzahl von Staufächern (2) aufweist, und dass für jeden der Reinigungsroboter (R) ein jeweiliges Staufach (2) der Vielzahl von Staufächern bestimmt wird, in das er automatisch eingebracht wird.

5. Verfahren nach Anspruch 4, **dadurch gekennzeichnet, dass** bei und/oder nach dem Einbringen eines der Reinigungsroboter (R) in das bestimmte Staufach (2) seine Reinigungs-, Aufgaben- und/oder Kartendaten und seine ID mit dem bestimmten Stauchfach (2) verknüpft werden.

6. Verfahren nach einem der vorangehenden Ansprüche 4 oder 5, **dadurch gekennzeichnet, dass** das Einbringen eines der Reinigungsroboter (R) folgende Schritte aufweist Fahren eines einzubringenden Reinigungsroboters (R) auf ein Aufnahmeelement (4) eines Liftsystems (3) des Wagens (1), vertikales Verfahren des Aufnahmeelements (4) bis zu dem bestimmten Staufach (2) und Fahren des Reinigungsroboters (R) in das Staufach (2), und dass das Ausbringen eines der Reinigungsroboter (R) folgende Schritte aufweist vertikales Verfahren des Aufnahmeelements (4) des Liftsystems (3) bis zu dem bestimmten Staufach (2), Fahren des in dem Staufach (2) verstauten Reinigungsroboters (R) auf das Aufnahmeelement (4), vertikales Verfahren des Aufnahmeelements (4), bis es einen Untergrund (U) erreicht, auf dem der Wagen (1) steht, und Fahren des Reinigungsroboters (R) von dem Aufnahmeelement (4) auf den Untergrund (U).

7. Verfahren nach Anspruch 6, **dadurch gekennzeichnet, dass** während der auszubringende Reinigungsroboter (R) sich aus dem oder in das Staufach (2) bewegt, seine Endposition detektiert wird, und/oder dass der ein- oder auszubringende Reinigungsroboter (R) sich in einem Pausenmodus befindet, während er mittels des Liftsystems (3) verfahren wird.

8. Verfahren nach einem der vorangehenden Ansprüche, **dadurch gekennzeichnet, dass** der auszubringende Reinigungsroboter (R) bei und/oder nach Beenden seines Ausbringens aus dem Wagen (1) ein Signal empfängt, seine Reinigung zu starten, und/oder dass der auszubringende Reinigungsroboter (R) bei Verlassen des Liftsystems seine Position als Start- und Endpunkt seiner durchzuführenden Reinigung in in ihm hinterlegten Kartendaten oder in einer neu zu erstellenden Karte vermerkt.

9. Verfahren nach einem der vorangehenden Ansprüche, **dadurch gekennzeichnet, dass** der Wagen (1) nach dem Ausbringen eines der Reinigungsroboter (R) detektiert, ob dieser Reinigungsroboter (R) den Wagen (1) verlassen hat.

10. Reinigungssystem mit einem Wagen (1) und mit einer Vielzahl an Reinigungsrobotern (R), das ausgebildet ist, ein Verfahren nach einem der vorangehenden Ansprüche auszuführen.

## Claims

1. Method for introducing and deploying cleaning robots (R) into and from a cart (1), wherein each cleaning robot (R) is automatically introduced into the cart (1) and the cleaning robots (R) are automatically deployed from the cart (1) in a sequence on the basis of the cleaning effort assigned to them or in a sequence specified by a user of the cart (1).

2. Method according to claim 1, **characterised in that** in order to deploy the cleaning robots (R) from the cart (1) in a sequence on the basis of the cleaning effort assigned to them, respective cleaning, task and/or map data and an ID of the individual cleaning robots (R) are transmitted from the cleaning robots (R) to the cart (1), and the cart (1) calculates the deployment sequence of the cleaning robots (R) using these data.

3. Method according to either claim 1 or claim 2, **characterised in that** each cleaning robot (R) is introduced into the cart (1) as soon as it sends the cart (1) a signal for introduction, or **in that** each cleaning robot (R) is introduced into the cart (1) in a sequence defined by a user into the cart (1).

4. Method according to any of the preceding claims, **characterised in that** the cart (1) has a plurality of storage compartments (2), and **in that**, for each of the cleaning robots (R), a relevant storage compartment (2) of the plurality of storage compartments is specified, into which the cleaning robot is automatically introduced.

5. Method according to claim 4, **characterised in that** during and/or after the introduction of one of the cleaning robots (R) into the specific storage compartment (2), the cleaning, task and/or map data and the ID of said robot are linked to the specific storage compartment (2).

6. Method according to either of the preceding claims 4 or 5,
**characterised in that** the introduction of one of the cleaning robots (R) comprises the following steps of moving a cleaning robot (R) to be introduced onto a receiving element (4) of a lift system (3) of the cart (1), vertically moving the receiving element (4) to the specific storage compartment (2), and moving the cleaning robot (R) into the storage compartment (2), and **in that** the deployment of one of the cleaning robots (R) comprises the following steps of vertically moving the receiving element (4) of the lift system (3) to the specific storage compartment (2), moving the cleaning robot (R) stored in the storage compartment (2) onto the receiving element (4), vertically moving the receiving element (4) until it reaches a substrate (U) on which the cart (1) stands, and moving the cleaning robot (R) from the receiving element (4) onto the substrate (U).

7. Method according to claim 6, **characterised in that** while the cleaning robot (R) to be deployed moves out of or into the storage compartment (2), the end position of said robot is detected, and/or **in that** the cleaning robot (R) that is to be introduced or deployed is in a pause mode while it is moved by means of the lift system (3).

8. Method according to any of the preceding claims, **characterised in that** the cleaning robot (R) to be deployed receives a signal when it is deployed from the cart (1) and/or after completion of its deployment from the cart, and/or **in that** the cleaning robot (R) to be deployed, when leaving the lift system, records its position as the start point and end point of its cleaning to be carried out in map data stored in said robot or in a map to be newly created.

9. Method according to any of the preceding claims, **characterised in that** after one of the cleaning robots (R) has been deployed, the cart (1) detects whether this cleaning robot (R) has left the cart (1).

10. Cleaning system comprising a cart (1) and a plurality of cleaning robots (R), which system is designed to carry out a method according to any of the preceding claims.

## Revendications

1. Procédé permettant l'introduction et la sortie de robots de nettoyage (R) dans un chariot (1), dans lequel chaque robot de nettoyage (R) est automatiquement introduit individuellement dans le chariot (1) et les robots de nettoyage (R) sont automatiquement sortis du chariot (1) dans un ordre en fonction de leur effort de nettoyage qui leur est attribué ou dans un ordre défini par un utilisateur du chariot (1).

2. Procédé selon la revendication 1, **caractérisé en ce que,** pour la sortie des robots de nettoyage (R) du chariot (1) dans un ordre en fonction de leur effort de nettoyage qui leur est attribué, des données de nettoyage, de tâche et/ou de carte respectives et un identifiant des robots de nettoyage (R) individuels sont transmis depuis les robots de nettoyage (R) au chariot (1) et le chariot (1) calcule l'ordre de sortie des robots de nettoyage (R) à l'aide desdites données.

3. Procédé selon la revendication 1 ou 2, **caractérisé en ce que** chaque robot de nettoyage (R) est introduit dans le chariot (1) dès qu'il envoie un signal pour l'introduction au chariot (1), **ou en ce que** chaque robot de nettoyage (R) est introduit dans le chariot (1) dans un ordre défini par un utilisateur dans le chariot (1).

4. Procédé selon l'une quelconque des revendications précédentes,
**caractérisé en ce que** le chariot (1) présente une pluralité de compartiments de rangement (2) **et en ce que,** pour chacun des robots de nettoyage (R), un compartiment de rangement (2) respectif de la pluralité de compartiments de rangement, dans lequel il est automatiquement introduit, est déterminé.

5. Procédé selon la revendication 4, **caractérisé en ce que,** lors de et/ou après l'introduction d'un des robots de nettoyage (R) dans le compartiment de rangement (2) déterminé, ses données de nettoyage, de tâche et/ou de carte et son identifiant sont associés au compartiment de rangement (2) déterminé.

6. Procédé selon l'une des revendications précédentes 4 ou 5,
**caractérisé en ce que** l'introduction de l'un des robots de nettoyage (R) présente les étapes suivantes déplacement d'un robot de nettoyage (R) à introduire sur un élément de réception (4) d'un système de levage (3) du chariot (1), déplacement vertical de l'élément de réception (4) jusqu'au compartiment de rangement (2) déterminé et déplacement du robot de nettoyage (R) dans le compartiment de rangement (2), **et en ce que** la sortie de l'un des robots de nettoyage (R) présente les étapes suivantes déplacement vertical de l'élément de réception (4) du système de levage (3) jusqu'au compartiment de rangement (2) déterminé, déplacement du robot de nettoyage (R) rangé dans le compartiment de rangement (2) sur l'élément de réception (4), déplacement vertical de l'élément de réception (4) jusqu'à ce qu'il atteigne un fond (U) sur lequel est situé le chariot (1) et déplacement du robot de nettoyage (R) depuis l'élément de réception (4) sur le sol (U).

7. Procédé selon la revendication 6, **caractérisé en ce que,** pendant que le robot de nettoyage (R) à sortir avance hors du compartiment de rangement (2) ou dans celui-ci, sa position finale est détectée, **et/ou en ce que** le robot de nettoyage (R) à introduire ou à sortir se trouve dans un mode de pause pendant qu'il est déplacé au moyen du système de levage (3).

8. Procédé selon l'une quelconque des revendications précédentes,
**caractérisé en ce que** le robot de nettoyage (R) à sortir reçoit un signal pour démarrer son nettoyage lors de et/ou après la fin de sa sortie du chariot (1), **et/ou en ce que** le robot de nettoyage (R) à sortir, lorsqu'il quitte le système de levage, indique sa position en tant que point de départ et de fin de son nettoyage à effectuer dans les données de carte enregistrées en lui ou dans une nouvelle carte à créer.

9. Procédé selon l'une quelconque des revendications précédentes,
**caractérisé en ce que** le chariot (1), après la sortie de l'un des robots de nettoyage (R), détecte si ledit robot de nettoyage (R) a quitté le chariot (1).

10. Système de nettoyage comportant un chariot (1) et comportant une pluralité de robots de nettoyage (R), lequel système est configuré pour exécuter un procédé selon l'une des revendications précédentes.
